# EUROPÄISCHE PATENTSCHRIFT

(11) **EP 3 197 266 B1**
(45) Veröffentlichungstag und Bekanntmachung des Hinweises auf die Patenterteilung: **10.11.2021**
(21) Anmeldenummer: 15766874.0
(22) Anmeldetag: 23.09.2015
(51) Int. Cl.: A01G 13/02, A01G 25/06

(54) **BEWÄSSERUNGSMATTE ZUM BEREITSTELLEN VON FLUIDEN FÜR DEN WURZELBEREICH VON PFLANZEN UND BEWÄSSERUNGSSYSTEM**
WATERING MAT FOR SUPPLYING FLUIDS FOR THE ROOT REGION OF PLANTS, AND WATERING SYSTEM
TAPIS D'IRRIGATION PERMETTANT L'APPORT DE FLUIDES AU SYSTÈME RACINAIRE DE PLANTES ET SYSTÈME D'IRRIGATION

(30) Priorität: 25.09.2014 DE 102014219449
(43) Veröffentlichungstag der Anmeldung: 02.08.2017
(73) Patentinhaber: Haub, Christine, 65520 Bad Camberg (DE)
(72) Erfinder: HAUB, Christine, 65520 Bad Camberg (DE); HAUB, Dietmar, 65520 Bad Camberg (DE); STIENEMANN, Nico, 48599 Gronau (DE)
(74) Vertreter: Dennemeyer & Associates S.A.
(86) Internationale Anmeldenummer: PCT/EP2015/071874
(87) Internationale Veröffentlichungsnummer: WO 2016/046264

(56) Entgegenhaltungen:
- WO-A1-02/082888
- WO-A1-2013/107954
- BE-A3- 1 011 763
- FR-A1- 2 514 046
- GB-A- 1 018 850

## Beschreibung

### Beschreibung

Die Erfindung betrifft eine Bewässerungsmatte zum Bereitstellen von Fluiden für den Wurzelbereich von Pflanzen gemäß dem Oberbegriff des Anspruchs 1 sowie ein Bewässerungssystem mit einer solchen Bewässerungsmatte.

Unter Bewässerung wird die Zufuhr von Fluiden, insbesondere von Wasser und/oder Nährlösungen für Pflanzen verstanden.

Zur Bewässerung von Pflanzen kann Wasser von oben auf das Erdreich und die Pflanzen aufgebracht werden. Um den Wasserverlust zu minimieren, kann das Wasser mittels Sprüheinrichtungen oder Tropfeinrichtungen in der Nähe der einzelnen Pflanzen aufgebracht werden. Hierbei geht Wasser allerdings insbesondere durch Verdunstung verloren.

Dieser Nachteil kann vermieden werden, wenn Bewässerungssysteme verwendet werden, die unterirdisch im Erdreich unter den Pflanzen verlegt werden. Solche Bewässerungssysteme umfassen Bewässerungsmatten, die mit Bewässerungsrohren bestückt sind, die an eine Wasserversorgungseinrichtung mit Ventilen und Steuereinrichtungen angeschlossen werden.

Aus der DE 695 14 365 T2 ist ein solches kapillares Bewässerungssystem bekannt, das eine Bewässerungsmatte aufweist, die mit mehreren perforierten Bewässerungsrohren bestückt ist. Die Bewässerungsmatte besteht aus einer oberen Lage eines Kapillarstoffes und aus einer unteren Lage eines Kapillarstoffes, zwischen denen die Bewässerungsrohre angeordnet sind. Die Begriffe "oben" und "unten" beziehen sich auf die Ausrichtung der im Erdreich verlegten Bewässerungsmatte.

Für die Aufnahme der Rohre sind zwischen den beiden Lagen der Kapillarstoffe Taschen vorgesehen, die durch Falten der oberen Lage gebildet werden. Die vorgeformten Taschen sind so dimensioniert, dass die Bewässerungsrohre in diese Taschen eingeschoben werden können. Die beiden Lagen sind z.B. durch Nähen, Ultraschall oder Schweißen miteinander verbunden. Es handelt sich hierbei um nahtartige Verbindungen, die den Nachteil haben, dass z. B. der Nähfaden reißen kann und die Verbindungsstellen aufgehen können. Das Verlegen derartiger Matten ist wegen des Verrutschens der einzelnen Lagen dann deutlich aufwendiger. Da solche Matten Kantenlängen von 50m oder mehr aufweisen, wird nicht nur die Handhabung und das Verlegen der Matten erschwert, sondern auch die Rohre können seitlich verrutschen und andere als die vorgesehenen Positionen einnehmen. Eine gleichmäßige Wasserverteilung in der Bewässerungsmatte ist in diesem Fall nicht mehr möglich.

Solche nahtartigen Verbindungen zwischen zwei Lagen sind aus der DE 10 2007 036 018 A1 bekannt, die eine Bewässerungsmatte zur großflächigen Verteilung von Wasser offenbart, wobei Mittel zur Detektierung des Feuchtigkeitsgrades in der Bewässerungsmatte vorgesehen sind. Zwischen der oberen und der unteren Lage der Bewässerungsmatte ist außerdem eine Absorptionsschicht als saugfähige Faserschüttung vorgesehen.

Aus der WO-A-02082888 ist ein solches Bewässerungsmatte und Bewässerungssystem bekannt.

Ein weiteres Problem stellt das Eindringen von Wurzeln in die Austrittsöffnungen der perforierten Rohre dar. Das Wurzelwerk dringt durch die Lage der Matten von außen im Bereich der Taschen ein und erstreckt sich insbesondere zu den Wasseraustrittsöffnungen, die dadurch verstopfen und im schlimmsten Fall den Austritt von Wasser gänzlich blockieren können. Eine gleichmäßige Wasserverteilung in den Bewässerungsmatten wird dadurch beeinträchtigt.

Es ist Aufgabe der Erfindung eine Bewässerungsmatte und ein Bewässerungssystem bereitzustellen, wobei die Bewässerungsmatte problemlos handhabbar sein soll und das Bewässerungssystem sich durch eine große Fluidaufnahmekapazität sowie schnelle und bessere Verteilung des Fluids auszeichnen soll.

Diese Aufgabe wird mit den Merkmalen des Anspruchs 1 gelöst.

Die Bewässerungsmatte ist dadurch gekennzeichnet, dass die obere Lage aus textilem Flächengebilde und die untere Lage aus textilem Flächengebilde in mindestens einem Bereich außerhalb der Tunnel flächig, vorzugsweise vollflächig miteinander verbunden sind.

Vorzugsweise sind mindestens 20%, insbesondere mindestens 50% der zur Verfügung stehenden Fläche miteinander verbunden.

Unter einer vollflächigen Verbindung wird verstanden, dass mindestens 90% der zur Verfügung stehenden Fläche miteinander verbunden ist.

Die für die flächige Verbindung zur Verfügung stehende Fläche wird durch die Kontaktfläche von unterer und oberer Lage gebildet. Dort, wo die beiden Lagen außerhalb der Tunnel aufeinanderliegen, können die beiden Lagen miteinander flächig verbunden werden.

Erfindungsgemäß sind die beiden Lagen miteinander vernadelt.

Das Vernadeln, das auch als Verfilzen bezeichnet wird, erlaubt auf einfache Weise eine flächige Verbindung, insbesondere von Vliesbahnen, wobei spezielle Nadelvorrichtungen wie Nadelbretter eingesetzt werden. Beim Vernadeln werden beide Lagen gemeinsam durchstochen. Durch ein ein- oder mehrmaliges Ein- und Ausstechen verschlingen die Fasern der benachbarten Lagen, so dass die Trennlinie zwischen unterer und oberer Lage weitgehend aufgehoben wird und die beiden Lagen insgesamt ein einheitliches, weitgehend homogenes textiles Flächengebilde bilden.

Das Herstellungsverfahren mittels Vernadeln hat den weiteren Vorteil, dass es kostengünstiger ist als z.B. das Vernähen der einzelnen Lagen zur Herstellung von nahtartigen Verbindungen.

Es hat sich überraschend herausgestellt, dass durch diesen Vernadelungsprozess die Fluidaufnahme- und Fluidverteileigenschaften der Lagen, insbesondere bei Vliesbahnen, positiv verändert werden. Es konnte festgestellt werden, dass derart miteinander verbundene Lagen eine schnellere und gleichmäßigere Fluidverteilung gewährleisten als dies bei nur nahtartig verbundenen textilen Flächengebilden der Fall ist.

Im Vergleich zu nahtartigen Verbindungen wird durch die flächige Vernadelung auch eine deutlich stabilere Verbindung zwischen den Lagen erzielt, so dass das Verarbeiten und Verlegen, insbesondere von großflächigen Bewässerungsmatten erleichtert wird. Da sich diese Verbindung der Lagen nicht löst, können auch die Bewässerungsrohre zwischen den Lagen nicht verrutschen, so dass eine gleichmäßige Fluidverteilung in der Bewässerungsmatte gewährleistet wird.

Ein weiterer Vorteil der flächigen Vernadelung besteht drin, dass sich z.B. keine Fäden, die für die nahtartige Verbindung gemäß des Standes der Technik verwendet werden, lösen können und sich beim Zuschneiden der Bewässerungsmatten in den Schneidwerkzeugen verfangen können.

Vorzugsweise wird ein Tunnel, in dem sich das Bewässerungsrohr befindet, mittels einer Falte der unteren Lage und mittels einer Falte der oberen Lage gebildet.

Diese Ausführungsform hat den Vorteil, dass für die Herstellung der Bewässerungsmatte gleichgroße obere und untere Lagen verwendet werden können. Der Herstellungsvorgang wird dadurch vereinfacht.

Die Bewässerungsmatte hat bezüglich der Trennebene zwischen unterer und oberer Lage einen symmetrischen Aufbau, so dass beim Verlegen nicht darauf geachtet werden muss, welche Lage sich oben oder unten befinden muss, es sei denn, dass z.B. unterschiedliche Materialien für die untere und obere Lage verwendet werden. Dies vereinfacht die Handhabung.

Dieser symmetrische Aufbau der Bewässerungsmatte hat auch den Vorteil, dass sich das Fluid gleichmäßiger auf die obere und untere Lage verteilt.

Unter einem textilen Flächengebilde werden für Fluide durchlässige Textilien, wie z.B. Gewebe, Vliesstoffe, Verbundstoffe, Geotextilien, Geogitter oder Folien verstanden, die die Fähigkeit besitzen, das Fluid, vorzugsweise Wasser, insbesondere durch Kapillarwirkung zu verteilen.

Vorzugsweise ist das textile Flächengebilde ein Vlies. Eine Lage aus Vliesmaterial hat vorzugsweise eine Grammatur von 100 bis 1000 g/m². Bevorzugte Grammaturbereiche sind 100 bis 300 g/m². Eine Grammatur von mindestens 100 g/m² ist erforderlich, um eine stabile Vernadelung zu gewährleisten.

Vorzugsweise besteht das textile Flächengebilde mindestens einer Lage aus einem Polyester, insbesondere aus einem Polyestervlies.

Vorzugsweise besteht mindestens die untere Lage aus einem textilen Flächengebilde aus Polyester, insbesondere aus dem Polyestervlies. Es können auch beide Lagen aus diesen Materialien gefertigt sein, was die Herstellung vereinfacht.

Die Fluidaufnahmekapazität und die Fluidverteilungseigenschaften können weiter verbessert werden, wenn mindestens eine Lage, vorzugsweise die untere Lage aus einem hydrophilen oder hydrophilierten Material besteht.

Hydrophile Flächengebilde haben den Vorteil, dass sie das Fluid, insbesondere Wasser besser und in größeren Mengen aufnehmen und länger speichern sowie das Fluid in der Bewässerungsmatte besser verteilen können.

Polyestermaterialien, wie z.B. die Fasern der Polyestervliese sind von sich aus hydrophil. Um die Eigenschaften hinsichtlich Fluidaufnahme und Fluidverteilung weiter zu verbessern, kann auch dieses Material einer zusätzlichen Hydrophilierung unterzogen werden.

Vorzugsweise weist die Bewässerungsmatte ein Absorberpulver zum Speichern des Fluids auf. Das Absorberpulver erhöht die Speicherkapazität der Bewässerungsmatte, ohne dass die Grammatur erhöht werden muss. Das Absorbermaterial quillt auf und hat den Vorteil, dass es auch unter Druck kein Fluid abgibt. Nur die Wurzeln haben die Fähigkeit, das Fluid, insbesondere das Wasser, aus dem Absorberpulver zurückzugewinnen. Das Absorberpulver ist in der Lage, ein Vielfaches seines Eigengewichts an Fluid, insbesondere Wasser aufzunehmen.

Vorzugsweise weist die Bewässerungsmatte ein Pulver aus Mykorrhiza-Pilzen auf. Die Mykorrhiza-Pilze liefern der Pflanze Nährsalze und Wasser und erhalten ihrerseits einen Teil der durch die Photosynthese der Pflanzen erzeugten Assimilate. Aufgrund dieser Symbiose können die Wurzeln und die Pflanze insgesamt gestärkt werden.

Vorzugsweise wird das Pulver, insbesondere das Absorberpulver und das Pulver aus Mykorrhiza-Pilzen zwischen der unteren Lage und der oberen Lage eingebracht. Das Pulver kann bei der Herstellung der Bewässerungsmatte auf die untere Lage aufgestreut werden. Aufgrund der flächigen Verbindung, insbesondere flächigen Vernadelung beider Lagen kann das Pulver zwischen den Lagen fixiert werden.

Das Pulver kann auch in mindestens einer Lage eingearbeitet sein. Die Einarbeitung des Pulvers erfolgt vorzugsweise bei der Herstellung des textilen Flächengebildes. Bei der Herstellung von Vliesen wird das Pulver vorzugsweise dem Ausgangsmaterial für die Vliesherstellung zugegeben, was den Vorteil hat, dass das Pulver gleichmäßig in der Lage, insbesondere in dem Vlies, verteilt wird. Wenn das Vlies mittels eines Vernadelungsverfahrens hergestellt wird, wird das Pulver vorzugsweise vor dem Vernadeln in das Ausgangsmaterial eingestreut.

Vorzugsweise enthält die Bewässerungsmatte 5 bis 40 g/m² Absorberpulver und/oder 10 bis 50 g/m² Pulver aus Mykorrhiza-Pilzen. Insbesondere werden 10 bis 30 g/m² Absorberpulver, insbesondere 10 bis 20 g/m² Absorberpulver eingesetzt. Bezüglich der Pulver aus Mykorrhiza-Pilzen sind 20 bis 40 g/m² besonders bevorzugt, insbesondere 20 bis 30 g/m².

Vorzugsweise werden die Pulver in die untere Lage eingearbeitet. Wenn solche Pulver in die Lagen eingestreut oder eingearbeitet werden, ist es von Vorteil, wenn die Grammatur der betreffenden Lage mindestens 300 g/m² bis 1000 g/m² aufweist.

Das erfindungsgemäße Bewässerungssystem umfasst eine Bewässerungsmatte sowie mindestens ein Rohr, das Austrittsöffnungen aufweist. Dieses Rohr oder diese Rohre sind in den Tunneln der Bewässerungsmatte angeordnet.

Unter einem Rohr wird nicht nur ein starres Rohr, sondern beispielsweise auch ein schlauchartiges Rohr verstanden. Der Begriff Rohr umfasst alle Leitungen, die geeignet sind, ein Fluid durch die Tunnel einer Bewässerungsmatte zu leiten. Solche Rohre werden auch als perforierte Rohre bezeichnet, da sie in der Regel über eine Vielzahl von Austrittsöffnungen verfügen, die sich üblicherweise in definierten Abständen im Rohr angeordnet sind.

Gemäß einer Ausführungsform kann das Rohr im Bereich mindestens einer Austrittsöffnung einen Tropfemitter aufweisen.

Solche Tropfemitter ermöglichen eine gezielte Steuerung der Abgabemenge des Fluids und werden in Bewässerungsrohren verwendet, die unmittelbar im Erdreich verlegt werden. Solche Rohre mit Tropfemittern sind beispielsweise aus der EP 2 248 414 A1 bekannt. Es hat sich gezeigt, dass mit Rohren, die einen Tropfemitter aufweisen, das Fluid gleichmäßiger innerhalb der Bewässerungsmatte ausgetragen werden kann, so dass insgesamt eine bessere Fluidverteilung über die gesamte Bewässerungsmatte erreicht wird.

Vorzugsweise ist der Tropfemitter mit einem metallischen Bauteil, insbesondere im Bereich der Auslassöffnung, ausgestattet, das das Eindringen von Pflanzwurzeln in die Auslassöffnung des Tropfemitters verhindert. Das metallische Bauteil verhindert aufgrund chemischer Reaktionen das Eindringen von Pflanzenwurzeln.

Vorzugsweise besteht das metallische Bauteil aus Kupfer oder einer Kupferlegierung. Kupfer ist nicht nur ein Nährstoff für Pflanzen, sondern behindert auch das Wurzelwachstum, wenn Kupferionen in hoher Konzentration mit den Wurzeln in Kontakt kommen. Die Austrittsöffnung wird auf einfache Weise von eindringenden Wurzeln freigehalten.

Rohre mit derart ausgestatteten Tropfemittern sind zwar aus der EP 2 248 414 A1 grundsätzlich bekannt. Der vorteilhafte Einsatz solcher Rohre in Kombination mit Bewässerungsmatten gemäß der Erfindung wurde jedoch noch nicht erkannt. Der Vorteil dieser Kombination aus flächig vernadelter Bewässerungsmatte und Rohren mit solchen Tropfemittern besteht darin, dass auf zusätzliche Maßnahmen zur Verhinderung des Eindringens von Wurzelwerk in die Auslauföffnungen der Rohre, wie z.B. ein Ummanteln der Rohre, verzichtet werden kann. Das erforderliche Tunnelvolumen ist geringer als bei ummantelten Rohren, so dass die Bewässerungsmatte enger aufgewickelt werden und das Transportvolumen der aufgewickelten Bewässerungsmatte gering gehalten werden kann.

Vorzugsweise besteht das Rohr aus einem elastischen Material. Rohre aus flexiblem Material, vorzugsweise einem flexiblen Kunststoffmaterial, haben den Vorteil, dass die mit diesen Rohren versehenen Bewässerungsmatten viel enger, d.h. mit einem kleineren Krümmungsradius aufgewickelt werden können. Das Transportvolumen der aufgewickelten Rohre wird dadurch erheblich reduziert.

Solche weichen Rohrmaterialien haben den weiteren Vorteil, dass die mit den Rohren bestückten Bewässerungsmatten zugeschnitten werden können, ohne dass unterschiedliche Schneidwerkzeuge für die Bewässerungsmatte einerseits und die Rohre andererseits eingesetzt werden müssen.

Um das Eindringen von Wurzelwerk in die Austrittsöffnungen der Rohre zu verhindern, gibt es außer der Verwendung eines Bauteils aus Kupfer noch eine weitere bevorzugte Ausführungsform.

Gemäß einer Ausführungsform weist das Rohr eine Ummantelung aus einem textilen Flächengebilde, insbesondere aus einem der zuvor beschriebenen bevorzugten Flächengebilde auf. Das textile Flächengebilde kann ebenfalls aus einem Vlies bestehen. Um das textile Flächengebilde auf dem Rohr zu fixieren, ist es mit mindestens einem Faden umwickelt, vorzugsweise in der Schlingfadentechnik, die auch als Kemafil-Technik bezeichnet wird.

Der Querschnitt der Tunnel ist vorzugsweise derart auf den Querschnitt des Rohres abgestimmt, dass die untere Lage und die obere Lage zumindest teilweise flächig an der Außenfläche des Rohres anliegen. Vorzugsweise mindestens 20%, insbesondere mindestens 50% der Außenfläche des Rohres liegt an der oberen und unteren Lage der Bewässerungsmatte an. Die Bewässerungsmatte kann auch mehr als jeweils eine obere und/oder untere Lage aufweisen.

Beispielhafte Ausführungsformen der Erfindung werden nachfolgend anhand der Zeichnungen näher erläutert.

Es zeigen:
- Figur 1: ein Bewässerungssystem mit einer Bewässerungsmatte mit zwei Rohren,
- Figur 2: eine Draufsicht auf einen Stirnabschnitt der in Fig. 1 gezeigten Bewässerungsmatte,
- Figur 3: eine perspektivische Darstellung eines Rohres mit Tropfemittern,
- Figur 4: eine perspektivische Darstellung eines Tropfemitters,
- Figur 5: einen Ausschnitt aus einer Ansicht der Stirnfläche einer Bewässerungsmatte gemäß einer weiteren Ausführungsform, und
- Figur 6: eine perspektivische Darstellung eines ummantelten Rohres, und
- Figuren 7 und 8: zwei schematische Darstellungen eines Schnittes durch eine Bewässerungsmatte mit Pulvern.

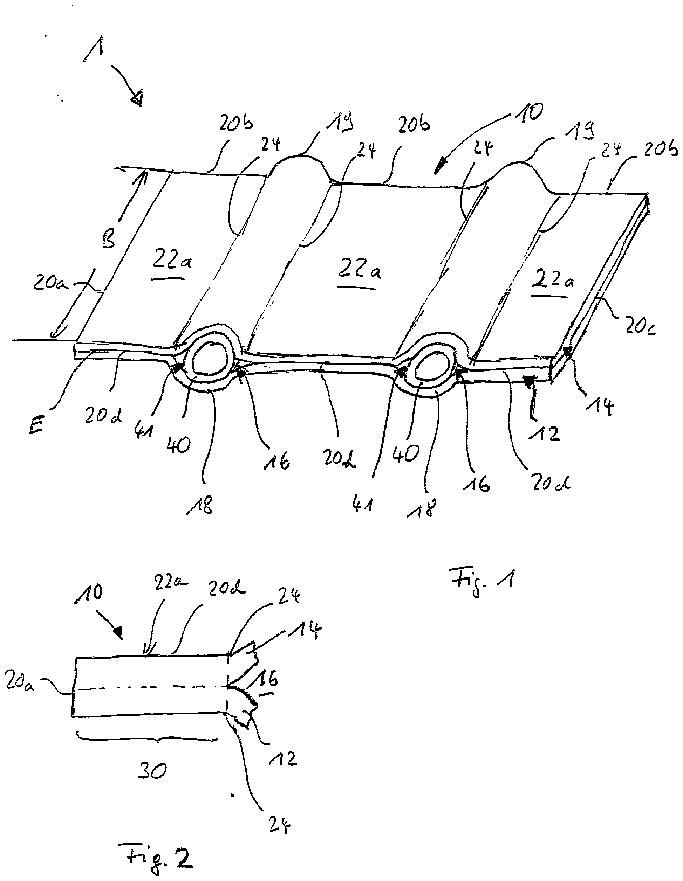

In der Figur 1 ist ein Bewässerungssystem 1 mit einer Bewässerungsmatte 10 und zwei Rohren 40 perspektivisch dargestellt. Die Bewässerungsmatte 10 weist eine untere Lage 12 und eine obere Lage 14 aus einem textilen Flächengebilde auf. Dieses textile Flächengebilde kann aus einem Vlies bestehen, wobei jede Lage eine Grammatur von 300 g/m² aufweist.

Wenn dieses Bewässerungssystem 1 im Erdreich verlegt ist, ist die Bewässerungsmatte 10 derart angeordnet, dass die obere Lage 14 den Pflanzen zugewandt ist.

Beide Lagen 12, 14 weisen jeweils zwei Falten 18 und 19 auf, so dass zwischen der unteren Lage 12 und der oberen Lage 14 zwei geradlinige Tunnel 16 gebildet werden, in denen die Rohre 40 angeordnet sind. Die Tunnel 16 erstrecken sich über die gesamte Breite B der Bewässerungsmatte 10. Die Falten 18, 19 sind im Wesentlichen gleich groß, so dass die Bewässerungsmatte 10 bezüglich der Trennebene E zwischen den Lagen 12, 14 symmetrisch ausgebildet ist.

Wenn die beiden Lagen 12, 14 identisch sind, d.h. insbesondere aus identischem Material bestehen, kann die Bewässerungsmatte 10 auch so verlegt werden, dass die untere Lage 12 und die obere Lage 14 vertauscht sind.

Der Querschnitt der Tunnel 16 ist derart auf den Querschnitt der Rohre 40 abgestimmt, dass die untere Lage 12 und die obere Lage 14 im Bereich der Falten 18, 19 überwiegend flächig an der Außenfläche 41 der Rohre 40 anliegen. Je kleiner der Querschnitt der Tunnel 16 ausgebildet ist, desto näher rutscht der Rand 24 der Falten 18, 19 an die Tunnel 16 heran und umso größer wird der für die Vernadelung zur Verfügung stehende Bereich der Bewässerungsmatte 10.

Die Bewässerungsmatte 10 weist vier Ränder 20a bis 20d auf. Zwischen den Rändern 24 der Falten 18, 19 und den jeweiligen Rändern 20a bis 20d werden insgesamt drei Bereiche 22a,b,c gebildet, in denen die untere und die obere Lage 12, 14 durch Vernadeln miteinander verbunden sind.

In den Bereichen 22a,b,c sind die untere Lage 12 und die obere Lage 14 vollflächig miteinander vernadelt, d.h. die gesamte Fläche der Bereiche 22a,b,c wurde für die Vernadelung genutzt. Dies ist auch in der Figur 2 dargestellt, die einen Ausschnitt der Stirnfläche der Bewässerungsmatte 10 der Figur 1 zeigt. Der vernadelte Stirnflächenabschnitt 30 erstreckt sich von dem Rand 20a bis zum Rand 24, wo die Lagen 12, 14 zur Ausbildung des Tunnels 16 auseinanderlaufen.

Die gesamte verfügbare Fläche ist in der in den Figuren 1 und 2 gezeigten Ausführungsform vernadelt.

Durch die Vernadelung sind die Fasern der aufeinanderliegenden Lagen 12, 14 derart miteinander verschlungen oder verfilzt, dass die Trennlinie zwischen den Lagen 12, 14 weitgehend aufgehoben wird. Dies ist durch die gestrichelte Linie in der Figur 2 angedeutet.

Eine oder beide Lagen 12, 14 können aus einem hydrophilen oder hydrophilierten Material bestehen. Vorzugsweise ist die untere Lage 12 aus einem solchen Material gefertigt.

Weiterhin kann mindestens eine Lage aus Polyester, insbesondere einem Polyestervlies bestehen. Es ist bevorzugt, dass mindestens die untere Lage 12 aus einem Polyestermaterial besteht.

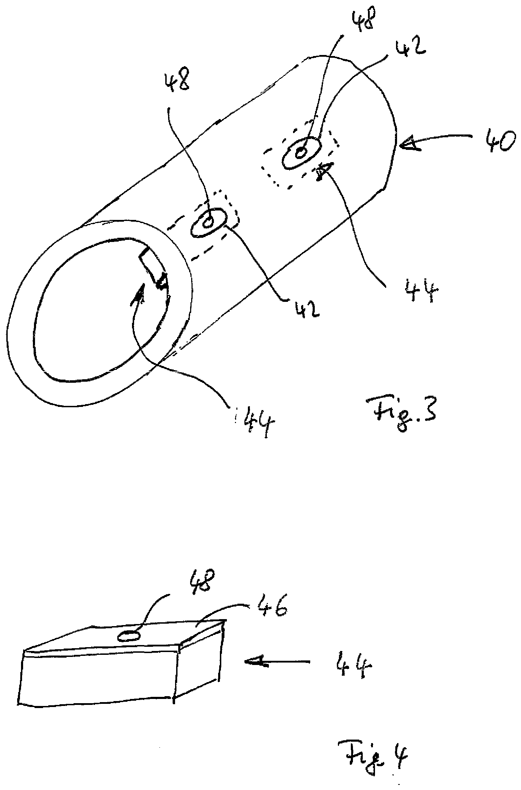

In der Figur 3 ist eine Ausführungsform eines Rohres 40 in perspektivischer Darstellung zu sehen. Innerhalb des Rohres 40 sind im Bereich der Austrittsöffnungen 42 Tropfemitter 44 angeordnet, die eine Auslassöffnung 48 aufweisen.

In der Figur 4 ist ein solcher Tropfemitter 44 vergrößert und lediglich schematisch dargestellt. Der Tropfemitter 44 verfügt über ein metallisches Bauteil 46 aus Kupfer oder einer Kupferlegierung in Form eines Deckplättchens, in dem die Auslassöffnung 48 vorgesehen ist. Das Kupferteil kann auch im Innenraum des Tropfemitters 44 angeordnet sein.

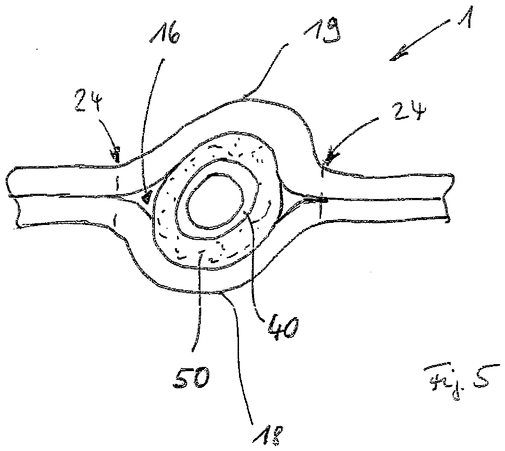

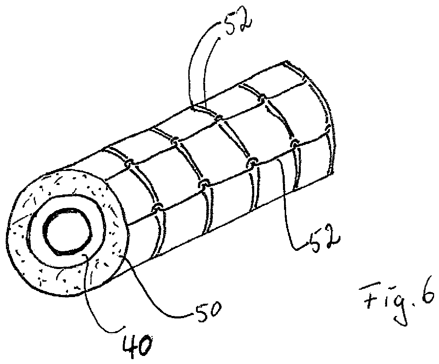

In der Figur 5 ist eine weitere Ausführungsform eines Bewässerungssystems 1 dargestellt, in der das Rohr 40 mit einer Ummantelung 50 versehen ist. Die Ummantelung besteht vorzugsweise aus einem Vlies, das um das Rohr herumgelegt ist. Mittels mindestens eines Fadens 52, der in Schlingfadentechnik (s. Figur 6) um die Ummantelung 50 gewickelt ist, wird die Ummantelung 50 auf dem Rohr 40 fixiert.

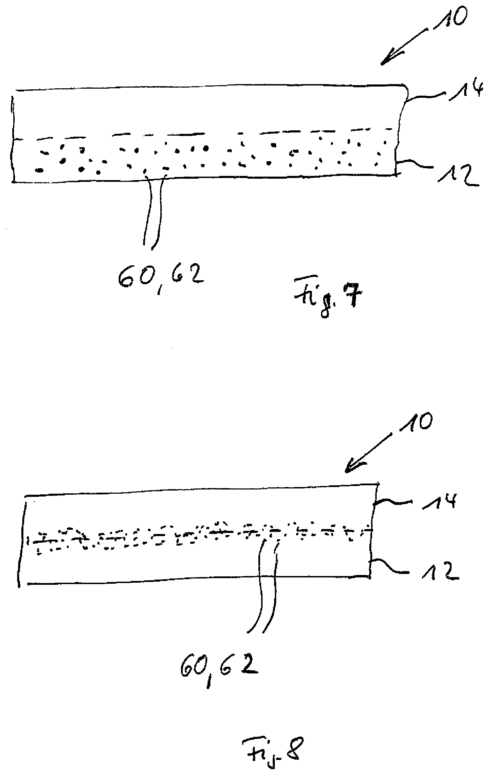

In den Figuren 7 und 8 sind zwei Ausschnitte von Bewässerungsmatten 10 gemäß weiterer Ausführungsformen dargestellt.

Wie in Figur 7 zu sehen ist, ist in die untere Lage 12 ein Absorberpulver 60 und/oder ein Pulver 62 aus Mykorrhiza-Pilzen eingearbeitet. Die Menge des Absorberpulvers beträgt vorzugsweise 15 g/m². Die Menge des Pulvers aus Mykorrhiza-Pilzen beträgt vorzugsweise 30 g/m².

In der Figur 8 ist eine weitere Ausführungsform dargestellt, in der das Pulver 60 und/oder 62 beim Herstellungsvorgang der Bewässerungsmatte 10 eingestreut worden ist. Das Pulver wird vorzugweise auf die untere Lage 12 aufgestreut, bevor die obere Lage 14 aufgelegt und mit der unteren Lage 12 vernadelt wird. Durch das Vernadeln wird das Pulver 60, 62 im Kontaktbereich zwischen beiden Lagen 12, 14 weitgehend gleichmäßig verteilt.

### Bezugszeichenliste

- 1: Bewässerungssystem
- 10: Bewässerungsmatte
- 12: untere Lage
- 14: obere Lage
- 16: Tunnel
- 18: Falte der unteren Lage
- 19: Falte der oberen Lage

- 20a,b,c,d: Rand der Bewässerungsmatte
- 22a,b,c: verbundener Bereichs der Lagen
- 24: Rand der Falte

- 30: vernadelter Stirnflächenabschnitt

- 40: Rohr
- 41: Außenfläche des Rohres
- 42: Austrittsöffnung
- 44: Tropfemitter
- 46: metallisches Bauteil
- 48: Auslassöffnung

- 50: Ummantelung des Rohres
- 52: Faden

- 60: Absorberpulver
- 62: Pulver aus Mykorrhiza-Pilzen
- B: Breite der Bewässerungsmatte
- E: Trennebene

## Patentansprüche

1. Bewässerungsmatte (10) zum Bereitstellen von Fluiden für den Wurzelbereich von Pflanzen mit wenigstens einer unteren Lage (12) und einer oberen Lage (14) aus jeweils einem textilen Flächengebilde, wobei zwischen der unteren Lage (12) und der oberen Lage (14) mindestens ein Tunnel (16) zur Aufnahme mindestens eines Rohres (40) ausgebildet ist, das Austrittsöffnungen (42) für das Fluid aufweist, und wobei die untere Lage (12) und die obere Lage (14) in mindestens einem Bereich (22a, b, c) außerhalb des mindestens einen Tunnels (16) miteinander verbunden sind, **dadurch gekennzeichnet, dass** in dem mindestens einen Bereich (22a, b, c) die untere Lage (12) und die obere Lage (14) miteinander flächig vernadelt sind.

2. Bewässerungsmatte nach Anspruch 1, **dadurch gekennzeichnet, dass** in dem mindestens einen Bereich (22a , b, c) die untere Lage (12) und die obere Lage (14) vollflächig miteinander verbunden sind.

3. Bewässerungsmatte nach Anspruch 1 oder 2, **dadurch gekennzeichnet, dass** der mindestens eine Tunnel (16) mittels einer Falte (18) der unteren Lage (12) und mittels einer Falte (19) der oberen Lage (14) gebildet ist.

4. Bewässerungsmatte nach einem der Ansprüche 1 bis 3, **dadurch gekennzeichnet, dass** das textile Flächengebilde ein Vlies ist.

5. Bewässerungsmatte nach einem der Ansprüche 1 bis 4, **dadurch gekennzeichnet, dass** das textile Flächengebilde mindestens einer Lage (12, 14) aus Polyestermaterial besteht.

6. Bewässerungsmatte nach einem der Ansprüche 1 bis 5, **dadurch gekennzeichnet, dass** das textile Flächengebilde mindestens einer Lage (12) aus einem hydrophilen oder hydrophilierten Material besteht.

7. Bewässerungsmatte nach einem der Ansprüche 1 bis 6, **dadurch gekennzeichnet, dass** die Bewässerungsmatte (10) ein Absorberpulver (60) zum Speichern des Fluids aufweist.

8. Bewässerungsmatte nach einem der Ansprüche 1 bis 7, **dadurch gekennzeichnet, dass** die Bewässerungsmatte (10) ein Pulver (62) aus Mykorrhiza-Pilzen aufweist.

9. Bewässerungsmatte nach Anspruch 7 oder 8, **dadurch gekennzeichnet, dass** das Pulver (60, 62) zwischen der unteren Lage (12) und der oberen Lage (14) eingebracht ist.

10. Bewässerungsmatte nach einem der Ansprüche 7 bis 9, **dadurch gekennzeichnet, dass** das Pulver (60, 62) in mindestens einer Lage (12, 14) eingearbeitet ist.

11. Bewässerungsmatte nach einem der Ansprüche 7 bis 10, **dadurch gekennzeichnet, dass** sie 5 bis 40 g/m² Absorberpulver (60) und/oder 10 bis 50 g/m² Pulver (62) aus Mykorrhiza-Pilzen enthält.

12. Bewässerungssystem (1) mit einer Bewässerungsmatte (10) nach einem der Ansprüche 1 bis 11 und mit mindestens einem Rohr (40), das Austrittsöffnungen (42) aufweist.

13. Bewässerungssystem nach Anspruch 12, **dadurch gekennzeichnet, dass** das Rohr (40) im Bereich mindestens einer Austrittsöffnung (42) einen Tropfemitter (44) aufweist.

14. Bewässerungssystem nach Anspruch 13, **dadurch gekennzeichnet, dass** der Tropfemitter (44) mindestens eine Auslassöffnung (48) aufweist und dass im Bereich der Auslassöffnung (48) ein metallisches Bauteil (46) angeordnet ist, dass das Eindringen von Pflanzenwurzeln in die Auslassöffnung (48) verhindert.

15. Bewässerungssystem nach Anspruch 14, **dadurch gekennzeichnet, dass** das metallische Bauteil (46) aus Kupfer oder einer Kupferlegierung besteht.

16. Bewässerungssystem nach einem der Ansprüche 12 bis 15, **dadurch gekennzeichnet, dass** das Rohr (40) aus einem elastischen Material besteht.

17. Bewässerungssystem nach einem der Ansprüche 12 bis 16, **dadurch gekennzeichnet, dass** das Rohr (40) eine Ummantelung (50) aus einem textilen Flächengebilde aufweist.

18. Bewässerungssystem nach Anspruch 17, **dadurch gekennzeichnet, dass** die Ummantelung (50) mit mindestens einem Faden (52) in Schlingfadentechnik umwickelt ist.

19. Bewässerungssystem nach einem der Ansprüche 12 bis 18, **dadurch gekennzeichnet, dass** der Querschnitt des mindestens einen Tunnels (16) der Bewässerungsmatte (10) derart auf den Querschnitt des Rohres (40) abgestimmt ist, dass die untere Lage (12) und die obere Lage (14) der Bewässerungsmatte (10) zumindest teilweise flächig an der Außenfläche (41) des Rohres (40) anliegen.

## Claims

1. A watering mat (10) for supplying fluids for the root region of plants, having at least one lower layer (12) and one upper layer (14), each made from a sheet-like textile structure, wherein at least one tunnel (16) for accommodating at least one pipe (40) having outlet openings (42) for the fluid, is formed between the lower layer (12) and the upper layer (14), and wherein the lower layer (12) and the upper layer (14) are connected to one another in at least one region (22a, b, c) outside the at least one tunnel (16), **characterised in that,** in the at least one region (22a, b, c), the lower layer (12) and the upper layer (14) are needled to one another in a sheet-like manner.

2. The watering mat according to claim 1, **characterised in that**, in the at least one region (22a, b, c), the lower layer (12) and the upper layer (14) are connected to one another over the entire area thereof.

3. The watering mat according to claim 1 or 2, **characterised in that** the at least one tunnel (16) is formed by a fold (18) of the lower layer (12) and by a fold (19) of the upper layer (14).

4. The watering mat according to one of claims 1 to 3, **characterised in that** the sheet-like textile structure is a non-woven fabric.

5. The watering mat according to one of claims 1 to 4, **characterised in that** the sheet-like textile structure consists of at least one layer (12, 14) made of a polyester material.

6. The watering mat according to one of claims 1 to 5, **characterised in that** the sheet-like textile structure consists of at least one layer (12) made of a hydrophilic or hydrophilised material.

7. The watering mat according to one of claims 1 to 6, **characterised in that** the watering mat (10) has an absorbent powder (60) for storing the fluid.

8. The watering mat according to one of claims 1 to 7, **characterised in that** the watering mat (10) has a powder (62) made of mycorrhizal fungi.

9. The watering mat according to claim 7 or 8, **characterised in that** the powder (60, 62) is introduced between the lower layer (12) and the upper layer (14).

10. The watering mat according to one of claims 7 to 9, **characterised in that** the powder (60, 62) is incorporated into at least one layer (12, 14).

11. The watering mat according to one of claims 7 to 10, **characterised in that** it contains 5 to 40 g/m² of absorbent powder (60) and/or 10 to 50 g/m² of powder (62) made from mycorrhizal fungi.

12. A watering system (1) having a watering mat (10) according to one of claims 1 to 11 and having at least one tube (40), which has outlet openings (42).

13. The watering system according to claim 12, **characterised in that** the tube (40) has a drip emitter (44) in the region of at least one outlet opening (42).

14. The watering system according to claim 13, **characterised in that** the drip emitter (44) has at least one outflow opening (48) and **in that** a metallic component (46) is arranged in the region of the outflow opening (48) to prevent the penetration of plant roots into the outflow opening (48).

15. The watering system according to claim 14, **characterised in that** the metallic component (46) consists of copper or a copper alloy.

16. The watering system according to one of claims 12 to 15, **characterised in that** the tube (40) consists of an elastic material.

17. The watering system according to one of claims 12 to 16, **characterised in that** the tube (40) has a casing (50) made of a textile fabric.

18. The watering system according to claim 17, **characterised in that** the casing (50) is wound with at least one thread (52) using a looped thread technique.

19. The watering system according to one of claims 12 to 18, **characterised in that** the cross section of the at least one tunnel (16) of the watering mat (10) is matched to the cross section of the tube (40) in such a way that the lower layer (12) and the upper layer (14) of the watering mat (10) rest at least partially flat against the outer surface (41) of the tube (40).

## Revendications

1. Tapis d'irrigation (10) permettant l'apport de fluides au système racinaire de plantes avec au moins une couche inférieure (12) et une couche supérieure (14) chacune constituée d'un tissu textile, dans lequel est formé au moins un tunnel (16) entre la couche inférieure (12) et la couche supérieure (14) pour recevoir au moins un tube (40) qui présente des ouvertures de sortie (42) pour le fluide, et dans lequel la couche inférieure (12) et la couche supérieure (14) sont reliées l'une à l'autre en au moins une zone (22a, b, c) à l'extérieur de l'au moins un tunnel (16), **caractérisé en ce que** la couche inférieure (12) et la couche supérieure (14) sont aiguilletées l'une à l'autre à plat dans l'au moins une zone (22a, b, c).

2. Tapis d'irrigation selon la revendication 1, **caractérisé en ce que** la couche inférieure (12) et la couche supérieure (14) sont reliées l'une à l'autre sur toute la surface dans l'au moins une zone (22a, b, c).

3. Tapis d'irrigation selon la revendication 1 ou 2, **caractérisé en ce que** l'au moins un tunnel (16) est formé au moyen d'un pli (18) de la couche inférieure (12) et au moyen d'un pli (19) de la couche supérieure (14).

4. Tapis d'irrigation selon l'une quelconque des revendications 1 à 3, **caractérisé en ce que** le tissu textile est un matériau non tissé.

5. Tapis d'irrigation selon l'une quelconque des revendications 1 à 4, **caractérisé en ce que** le tissu textile est constitué d'au moins une couche (12, 14) en polyester.

6. Tapis d'irrigation selon l'une quelconque des revendications 1 à 5, **caractérisé en ce que** le tissu textile est constitué d'au moins une couche (12) en matériau hydrophile ou hydrophilisé.

7. Tapis d'irrigation selon l'une quelconque des revendications 1 à 6, **caractérisé en ce que** le tapis d'irrigation (10) présente une poudre absorbante (60) pour stocker le fluide.

8. Tapis d'irrigation selon l'une quelconque des revendications 1 à 7, **caractérisé en ce que** le tapis d'irrigation (10) présente une poudre (62) à base de champignons mycorhiziens.

9. Tapis d'irrigation selon la revendication 7 ou 8, **caractérisé en ce que** la poudre (60, 62) est introduite entre la couche inférieure (12) et la couche supérieure (14).

10. Tapis d'irrigation selon l'une quelconque des revendications 7 à 9, **caractérisé en ce que** la poudre (60, 62) est incorporée dans au moins une couche (12, 14).

11. Tapis d'irrigation selon l'une quelconque des revendications 7 à 10, **caractérisé en ce qu'**il contient 5 à 40 g/m² de poudre absorbante (60) et/ou 10 à 50 g/m² de poudre (62) de champignons mycorhiziens.

12. Système d'irrigation (1) avec tapis d'irrigation (10) selon l'une quelconque des revendications 1 à 11 et avec au moins un tuyau (40) qui présente des orifices de sortie (42).

13. Système d'irrigation selon la revendication 12, **caractérisé en ce que** le tuyau (40) présente un goutteur (44) au niveau d'au moins un orifice de sortie (42).

14. Système d'irrigation selon la revendication 13, **caractérisé en ce que** le goutteur (44) présente au moins une ouverture de sortie (48) et **en ce qu'**un élément métallique (46) est disposé dans la zone de l'ouverture de sortie (48) pour empêcher les racines des plantes de pénétrer dans l'orifice de sortie (48).

15. Système d'irrigation selon la revendication 14, **caractérisé en ce que** l'élément métallique (46) est constitué de cuivre ou d'un alliage de cuivre.

16. Système d'irrigation selon l'une quelconque des revendications 12 à 15, **caractérisé en ce que** le tube (40) est constitué d'un matériau élastique.

17. Système d'irrigation selon l'une quelconque des revendications 12 à 16, **caractérisé en ce que** le tuyau (40) présente une enveloppe (50) réalisée en tissu textile.

18. Système d'irrigation selon la revendication 17, **caractérisé en ce que** l'enveloppe (50) est entourée d'au moins un fil (52) selon la technique du fil en boucle.

19. Système d'irrigation selon l'une quelconque des revendications 12 à 18, **caractérisé en ce que** la section transversale de l'au moins un tunnel (16) du tapis d'irrigation (10) est adaptée à la section transversale du tuyau (40) de telle manière que la couche inférieure (12) et la couche supérieure (14) du tapis d'irrigation (10) reposent au moins partiellement à plat sur la surface extérieure (41) du tuyau (40).
